# EUROPÄISCHE PATENTSCHRIFT

(11) **EP 0 424 791 B1**
(45) Veröffentlichungstag und Bekanntmachung des Hinweises auf die Patenterteilung: **31.08.1994**
(21) Anmeldenummer: 90119882.0
(22) Anmeldetag: 17.10.1990
(51) Int. Cl.: C08G 65/20, C08G 65/30, C08G 65/32

(54) **Vefahren zur Herstellung von hochreinen Polymerisaten des Tetrahydrofurans**
Process for the preparation of high purity tetrahydrofuron polymers
Procédé de préparation de polymère du tétrahydrofuronne de haute pureté

(30) Priorität: 27.10.1989 DE 3935750
(43) Veröffentlichungstag der Anmeldung: 02.05.1991
(73) Patentinhaber: BASF Aktiengesellschaft, 67063 Ludwigshafen (DE)
(72) Erfinder: Mueller, Herbert, Dr., W-6710 Frankenthal (DE)

(56) Entgegenhaltungen:
- EP-A- 0 061 668
- EP-A- 0 302 332

## Beschreibung

Diese Erfindung betrifft ein Verfahren zur Herstellung von hochreinen Polymerisaten oder Copolymerisaten, die durch kationische Polymerisation von Tetrahydrofuran (THF) oder durch kationische Copolymerisation von THF und Alkylenoxid erhalten werden.

Bekanntlich werden bei der Polymerisation von THF in Gegenwart von Carbonsäureanhydriden und starken Säuren Polytetramethylenetherglykol oder die entsprechenden Diester gebildet. Polytetrahydrofurane (PTHF) dieser Art, wie auch die durch Copolymerisation von THF mit Alkylenoxiden, wie Ethylenoxid oder Propylenoxid, erhältlichen Copolymeren, haben Molgewichte von >200. Sie werden insbesondere für die Herstellung von Polyurethanen verwendet.

Wie umfangreiche Untersuchungen ergeben haben, sind für die Polymerisation von THF in technisch wirtschaftlichem Maßstab nur wenige saure Katalysatoren geeignet, die allerdings die nachteilige Wirkung haben, daß Polymerisate mit gelb bis bräunlichen Verfärbungen erhalten werden. Die Verfärbungen nehmen mit der Temperatur bei der Polymerisation zu. Darüber hinaus hängt die Reinheit des PTHF auch von der Qualität des eingesetzten THF ab.

THF technischer Qualität enthält geringe Mengen an Verunreinigungen in einer Konzentration von 10 bis 500 ppm. Die chemische Natur dieser Verunreinigungen ist nicht in allen Einzelheiten bekannt. Obwohl dieses THF von sehr hoher Reinheit ist - es hat normalerweise einen Reinheitsgrad von 99,9 % - verursachen bereits Spuren an Verunreinigungen bei der Polymerisation die oben genannten Verfärbungen. Darüber hinaus beobachtet man gleichzeitig mit der Verfärbung eine veränderte Reaktionsfähigkeit bei der Herstellung von Polyestern oder Polyurethanen aus den Polytetramethylenetherglykol. Dies sind gravierende Mängel, denn Farbe und reproduzierbare Verarbeitung gehören zu den wichtigsten Eigenschaften eines Polymerisates, das technische Anwendung finden soll.

Es sind deshalb zahlreiche Verfahren für die Behandlung von technischem THF zum Zwecke der Qualitätsverbesserung vorgeschlagen worden. So wird z.B. in der DE-A 2 801 792 ein Verfahren beschrieben, bei dem man THF vor der Polymerisation mit Bleicherden behandelt. Man erhält dabei zwar Polymerisate mit verbesserter Farbzahl, jedoch läßt sich diese Behandlungsmethode nicht in jedem Fall reprodzierbar auf jede verfügbare technische Qualität des THF anwenden.

Nach den Angaben der EP-A-61 668 stellt man Polytetramethylenetherglykol oder -glykoldiester mit geringer Farbzahl dadurch her, daß man die durch kationische Polymerisation von THF erhaltenen Polymerisate in Gegenwart eines Hydrierkatalysators einer Behandlung mit Wasserstoff unterwirft. Verwendet man bei der Polymerisation eine THF-Qualität, wie sie der Markt anbietet, so ist man gezwungen, die hydrierende Entfärbung bei sehr hohen Wasserstoffdrücken von z.B. 50 bis 300 bar durchzuführen. Dieses Hochdruckverfahren ist auch beim laufenden Betrieb kostspielig, da beispielsweise ein erheblicher Bedarf an Kompressionsenergie für Wasserstoffkreisgas aufgebracht werden muß.

In vielen Fällen ist es sogar erforderlich, teure Edelmetallkatalysatoren zu verwenden. Die benötigten Katalysatoren haben auch häufig eine geringe Lebensdauer. Ähnliche Einschränkungen gelten auch für die entfärbende Reinigung der Polymerisate durch eine Aktivkohle-Behandlung, wie sie in den US-A-3 935 252 oder US-A-2 751 419 beschrieben werden. Diese Verfahren benötigen einen erheblichen apparativen Aufwand und verursachen zusätzliche nicht zu vernachlässigende Kosten für den Einsatz der Aktivkohle, die außerdem nur eine begrenzte Reinigungskapazität besitzt.

Da sich die unterschiedlichen Verunreinigungen im THF, die zu Verfärbungen in den Endprodukten führen, meist nicht genau definierten lassen, und es selbst nach einer analytischen Untersuchung kaum möglich ist, vorauszusehen, ob die Qualtiät des verwendeten und gegebenenfalls vorbehandelten THF für die Polymerisation so geeignet ist, daß spezifikationsgerechte Polymerisate erhalten werden, macht es bei der großtechnischen Herstellung von PTHF die größten Schwierigkeiten, eine Ausschußproduktion sicher zu vermeiden.

In der EP-A-241 890 wird der Vorschlag gemacht, bei der Polymerisation von THF mit Carbonsäureanhydrid als Telogen und Bleicherde als Katalysator in Gegenwart von geringen Mengen Alkylenoxiden zu polymerisieren. Alkylenoxide, wie Ethylenoxid oder Propylenoxid sind aber Stoffe mit hohem Gefahrenpotential. Ethylenoxid, das bevorzugt eingesetzt wird, wurde als krebserzeugender Stoff im Tierversuch erkannt. Deshalb kann Ethylenoxid nur mit erheblichem technischen Aufwand gehandhabt werden, um die Sicherheit am Arbeitsplatz zu gewährleisten. Außerdem ist sicherzustellen, daß in den Fertigprodukten keine Reste dieser gefährlichen Chemikalie, die im Polymerisat kaum nachzuweisen ist, zurückbleiben, was kaum möglich ist.

Es wurde nun gefunden, daß man bei der Herstellung von hochreinen Polymerisaten oder Copolymerisaten, die durch kationische Polymerisation von Tetrahydrofuran und gegebenenfalls Alkylenoxid erhalten werden, bei dem man die Polymerisate zur Verringerung der Farbzahl in Gegenwart eines Hydrierkatalysators mit Wasserstoff behandelt, besonders vorteilhafte Ergebnisse erhält, wenn man den Wasserstoff mit einem Bläschendurchmesser von kleiner als 50 µm, vorzugsweise kleiner als 30 µm, insbesondere kleiner als 10 µm, in das Polymerisat einleitet.

Nach dem neuen Verfahren läßt sich hochreines PTHF mit niedriger Farbzahl sicher und reproduzierbar herstellen.

Zur Überführung des eingesetzten Wasserstoffs in die Mikrobläschen sind z.B. hochporöse Sinterwerkstoff mit einer Porenweite von <50, vorzugsweise <30, insbesondere <10 µm geeignet. Solche Werkstoffe bestehen z.B. aus Glas, rostfreiem Sinterstahl, Sinterbronze, Nickel oder korrosionsfesten Legierungen, wie die unter den Warenzeichen Hastelloy®, Monel®, Inconel®, Incoloy® oder Tital® im Handel erhältlichen Metallegierungen. Diese Sinterwerkstoffe werden meist pulvermetallurgisch hergestellt und weisen deshalb eine Porengrößenverteilung auf. Diese Porengrößenverteilung und die Porenweite bewirken die Dispergierung des Wasserstoffs zu Mikrobläschen der genannten Größe und damit die besondere Wirksamkeit der hydrierenden Entfärbung.

Das neue Verfahren läßt sich auf alle Polymerisate des THF anwenden, die durch kationische Polymerisation von THF oder durch kationische Copolymerisation von THF und Alkylenoxiden, wie Ethylenoxid oder Propylenoxid erhalten werden. Man kann dabei von einem THF handelsüblicher Qualität ausgehen; es spielt auch keine Rolle, ob das THF auf der Basis von Acetylen und Formaldehyd, Maleinsäureanhydrid, Allylalkohol oder Butadien hergestellt wurde. Die Polymerisate sind insbesondere Polytetramethylenetherglykole oder Polytetramethylenetherglykoldiester. Bei der Herstellung der Ester kann man die verschiedensten Initiatorsysteme anwenden. Diese Initiatorsysteme bestimmen die Endgruppen des primär erhaltenen Polymerisates. Technisch bedeutungsvoll sind Polymerisate, die verseifbare Endgruppen wie Estergruppen von Carbonsäuren oder Sulfonsäuren enthalten.

Da für die Hauptanwendungsbereiche der Polytetramethylenetherglykoldiester, dem Polyurethansektor, das Polymerisat mit Hydroxylendgruppen benötigt wird, werden die Estergruppen enthaltenden Polymere in einer der Polymerisation nachfolgenden Stufe verseift.

Es ist ein besonderer Vorzug des vorliegenden Verfahrens, daß die hydrierende Behandlung bereits an dem Primärpolymerisaten vollzogen werden kann, so daß auch diese - falls benötigt - in farbloser reiner Form zugänglich sind. Man kann natürlich auch mit demselben Erfolg die Polymerisate mit Hydroxylgruppen hydrierend behandeln.

Man behandelt die THF-Polymerisate mit dem feinverteilten Wasserstoff in Gegenwart von Hydrierungskatalysatoren bei Normaldruck oder Drücken bis 40, vorzugsweise bis 25 bar. Da die Anwendung von Wasserstoffdrücken von über 10 bar gegenüber der Hydrierung im Bereich von drucklos bis 10 bar keine meßbaren Vorteile erbringt, wird zweckmäßigerweise bei Drücken unter 15 bar, insbesondere zwischen 5 und 12 bar Wasserstoff hydriert. Man hydriert bei Raumtemperatur oder erhöhten Temperaturen von beispielsweise 50 bis 170°C. Da Temperaturen oberhalb von 100°C keine besondere Farbverbesserung bringen, werden Hydriertemperaturen zwischen 70 und 120°C bevorzugt.

Man kann die zu behandelnden Polymerisate direkt oder gelöst in Lösungsmitteln einsetzen. Unerwartet und nicht ohne weiteres erklärbar ist der Befund, daß man beim Einsatz der lösungsmittelfreien Polymerisate bessere Ergebnisse als mit gelösten Produkten erhält. Die bevorzugte Ausführungsform des Verfahrens ist deshalb die lösungsmittelfreie Fahrweise, wobei man die Sumpffahrweise anwendet. Dabei ist der Hydrierreaktor entweder mit einem Katalysatorfestbett ausgefüllt, das vollständig mit dem zu hydrierenden Polymerisat bedeckt ist, oder aber das zu hydrierende Polymerisat enthält den suspendierten Katalysator. Der Wasserstoff wird zweckmäßigerweise an der tiefsten Stelle des Reaktors der flüssigen Phase über eine Einrichtung, die den feinverteilten Wasserstoff erzeugt, wie einen hochporösen Sinterstoff, zugeführt.

Man verwendet an sich bekannte Hydrierkatalysatoren, wie Metalle der achten Nebengruppe, insbesondere Nickel. Gut geeignet sind auch Katalysatoren mit den Metallen Cobalt, Eisen, Kupfer sowie den Edelmetallen Ruthenium, Palladium oder Platin. Die Metalle können in reiner Form, z.B. als Raney-Metalle oder z.B. als reduzierte Oxide angewendet werden. Die Katalysatoren können die Hydriermetalle auch auf geeigneten Trägern, wie Aluminiumoxid, Titandioxid, Siliciumdioxid, Bimsstein, Bentonit oder z.B. Magnesiumsilicat enthalten. Katalysatoren, die unedle Metalle, wie Eisen, Kobalt, Nickel und Kupfer enthalten, werden zweckmäßig vor der Anwendung durch Reduktion mit Wasserstoff in die aktive Form überführt. Bei der Anwendung von Edelmetallkatalysatoren erübrigt sich in den meisten Fällen eine solche Operation. Nickel ist als Hydrierkatalysator bevorzugt.

Mit dem neuen Verfahren lassen sich THF-Polymerisate, die üblicherweise Farbzahlen von etwa 40 bis 150 HAZEN aufweisen, sicher und wirksam entfärben, wobei Farbzahlen von 5 bis 40 erreicht werden. Die primär vorhandene gelbliche oder bräunliche Farbe der Polymerisate verschwindet fast momentan und es entstehen farblose Produkte mit der Säurezahl 0. Im Vergleich zu der in der EP-PS 61 668 beschriebenen Wasserstoffbehandlung, bei der tief gefärbte THF-Polymerisate auch bei Wasserstoffdrücken von über 200 bar nicht oder nur unzureichend entfärbt werden, lassen sich solche Polymerisate nach dem erfindungsgemäßen Verfahren bereits bei Wasserstoffdrücken von unter 15 bar glatt entfärben. Auch die Erniedrigung der Säurezahl in den Polymerisaten bis auf 0 stellt sich schon bei Wasserstoffdrücken von 1 bis 20 bar ein, während man dies mit herkömmlichen Verfahren erst bei Wasserstoffdrücken von 30 bar und mehr erreicht.

Es ist überraschend, daß Wasserstoff, der beim erfindungsgemäßen Einsatz z.B. durch Sinterwerkstoffe fein verteilt wird, sich bei der Entfärbung von THF-Polymerisaten so erheblich wirksamer erweist, als ein Wasserstoffstrom, der bei gebräuchlichen Hydrieranlagen, z.B. durch Düsen im Polymerisat feinverteilt wird. Beim Einsatz von Düsen wird die Flüssigkeit nämlich mit solcher Geschwindigkeit durch die Düse gepreßt, daß Scherkräfte im Bereich der Gasflüssigkeitstrenngrenze und in den katalysatornahen Schichten zu einer außerordentlichen Erhöhung des Stoffübergangs führen. So wird in "Chemieanlagen und Verfahren, Heft 3/1971, S. 50 gesagt: "Meistens ist der Hauptwiderstand des Stoffübergangs im Bereich der laminaren Grenzschicht am Katalysator zu suchen. Wenn es gelingt, diese Schicht durch erhöhte Scherkräfte aufzureißen, so darf man mit einer wesentlichen Erhöhung der Hydriergeschwindigkeit rechnen". Beim erfindungsgemäßen Einsatz von hochporösen Sinterwerkstoffen für die Dispergierung des Wasserstoffs treten in der Nähe der Katalysatoren keine erhöhten Scherkräfte auf. Wie durch ein Vergleichsbeispiel gezeigt wird, gelingt es nicht, eine ausreichende Entfärbung des THF-Polymerisats zu erreichen, wenn man den Wasserstoff mit Hilfe einer technisch üblichen Düse in das Polymerisat einleitet.

Bei der erfindungsgemäßen unter sehr milden Bedingungen stattfindenden hydrierenden Behandlung ist die für die Entfärbung verbrauchte Wasserstoffmenge unmeßbar klein. Da die ursprünglich im Polymerisat enthaltenen Verunreinigungen, die die Färbung und die Säurezahl verursachen, ihrer chemischen Natur nach unbekannt sind und in kaum nachweisbarer Konzentration vorliegen, kann nicht festgestellt werden, in welcher Weise die erfindungsgemäßen Methoden auf das Polymerisat einwirkt.

Die in den Beispielen genannten Teile sind Gewichtsteile. Sie verhalten sich zu Volumenteile wie Kilogramm zu Liter. Die Bestimmungsmethoden der Farbzahlen nach dem APHA-Verfahren werden in den Normen DIN 53 409 und ASTM-D-1209 beschrieben.

### Beispiel 1

Technisches Tetrahydrofuran wurde ohne Vorbehandlung nach Beispiel 3 der DE-OS 29 16 653 polymerisiert. Dabei wurde ein Polytetramethylenetherglykoldiacetat vom Molekulargewicht 650 mit einer Farbzahl von 100 APHA erhalten. Eine Produktprobe wurde durch Hydrolyse in das Polytetramethylenetherglykol überführt, das eine Farbzahl von 110 APHA und eine Säurezahl von 0,05 mg KOH/g aufwies.

Das den Reaktor verlassende Polytetramethylenetherglykoldiacetat wurde vom nicht umgesetzten THF durch Destillation im Vakuum befreit. Die erfindungsgemäße hydrierende Reinigung erfolgte in einem senkrecht stehenden Reaktionsrohr mit einem Reaktionsinhalt von 1000 ml Volumenteilen. Das Verhältnis des Durchmessers zur Länge des Reaktionsrohres betrug 1:40. Das Reaktionsrohr enthielt einen Katalysator mit der Korngröße 2,5 bis 3,5 mm, der aus einer Nickel-Aluminium-Legierung bestand (42 Gew.-% Nickel und 58 Gew.-% Aluminium). Der Katalysator wurde nach den Angaben der DE-PS 20 04 611 durch Behandlung mit einer 0,5 gew.-%igen wäßrigen Natronlauge hergestellt, wobei 25 Gew.-% des ursprünglich vorhandenen Aluminiums entfernt wurden.

Die Wasserstoffzufuhr erfolgte am unteren Ende des Reaktionsrohres über eine Sintermetallkerze aus rostfreien Stahl mit den Maßen: Innendurchmesser: 17 mm, Außendurchmesser: 22 mm, Länge 150 mm. Die Sintermetallkerze ist im Handel unter der Bezeichnung Sika R 3 (Hersteller: Sintermetall-Werk Krebsöge GmbH, 5608 Radevormwald 1) erhältlich. Sie hat eine Porenweite von 3 µm.

Das Polytetramethylenetherglykoldiacetat wurde von unten nach oben über das Katalysatorbett geleitet, gleichzeitig wurden bei einem Druck von 8 bar stündlich 40 Nl Wasserstoff in das Reaktionsrohr eingeleitet und als Abgas entnommen. Die Katalysatorbelastung mit Polymerisat betrug 0,5 kg/l h. Die Reaktionstemperatur wurde auf 100°C eingestellt. Das den Reaktor verlassende Polytetramethylenetherglykoldiacetat hatte eine Farbzahl von kleiner als 5 APHA und eine Säurezahl von 0 mg KOH/g. Eine Produktprobe wurde durch Hydrolyse in das Polytetramethylenetherglykol überführt, das eine Farbzahl von ebenfalls weniger als 5 APHA aufwies.

### Beispiel 2

Beispiel 1 wurde wiederholt, wobei jedoch als Katalysator ein Trägerkatalysator mit einem Gehalt von 25 Gew.-% Nickel auf 75 Gew.-% Kieselgel bei einer Katalysatorbelastung von 400 ml/l h eingesetzt wure. Es wurde ein Polymerisat mit einer Farbzahl kleiner als 5 APHA erhalten.

### Beispiel 3

Es wurde wie in Beispiel 1 beschrieben bei Normalruck gearbeitet, wobei man den von der Firma Mallinckrodt Inc., St. Louis, Mo., USA unter der Bezeichnung E 474 TR vertriebenen Nickelkatalysator (ca. 50 bis 60 % Nickel) verwendete. Vor der entfärbenden Hydrierung wurde der Katalysator bei 200°C und Normaldruck mit Wasserstoff reaktiviert. Der Wasserstoff (50 Nl/h) wurde wie beschrieben im Hydrierreaktor verteilt. Es wurde ein Polytetramethylenetherglykoldiacetat mit einer Farbzahl von 5 APHA erhalten.

Wurde der Wasserstoff durch eine Sintermetallkerze mit der Typenbezeichnung Sika R 30 und der Porenweite 30 µm eingeleitet, so erhielt man ein Polymerisat mit der Farbzahl 40 APHA.

### Beispiel 4 (Vergleich)

Beispiel 1 wurde wiederholt, wobei man den Wasserstoff jedoch durch eine Öffnung mit einem Durchmesser von 3 mm in den Reaktor einleitete. Es wurde eine Farbaufhellung des Polytetrahmethylenetherglykoldiacetats auf 80 APHA festgestellt. Bei einer Verdoppelung der Verweilzeit des Produktes im Hydrierreaktor wurde keine weitere Farbaufhellung beobachtet.

### Beispiel 5 (Vergleich)

Beispiel 3 wurde wiederholt, wobei man die Hydrierung bei 20 bar Wasserstoffdruck durchführte. Der Reaktor enthielt anstelle des Sintermetallwerkstoffes eine Düse, wie sie in CAV 1971, März, Seite 49 in der Abbildung 2 dargestellt ist.

Das der Düse mittels einer Pumpe zugeführte PTHF-Diacetat wurde am oberen Ende des Hydrierreaktors entnommen. Die so in den Reaktor zurückgeführte stündliche Menge betrug das fünfzigfache des Reaktorvolumens. Es wurde am Reaktor etwa ebensoviel Wasserstoffabgas ausgeschleust, wie PTHF-Diacetat aus dem Hydrierreaktor zurückgeführt wurde. Die Katalysatorbelastung betrug 0,5 kg/l. Das die Hydrierung verlassende PTHF-Diacetat hatte eine Farbzahl von 25 APHA, obwohl bei 20 bar Wasserstoff gearbeitet wurde.

## Patentansprüche

1. Verfahren zur Herstellung von hochreinen Polymerisaten oder Copolymerisaten, die durch kationische Polymerisation von Tetrahydrofuran und gegebenenfalls Alkylenoxid erhalten werden, bei dem man die Polymerisate zur Verringerung der Farbzahl in Gegenwart eines Hydrierkatalysators mit Wasserstoff behandelt, dadurch gekennzeichnet, daß man den Wasserstoff mit einem Bläschendurchmesser von kleiner als 50 µm in das Polymerisat einleitet.

2. Verfahren nach Anspruch 1, dadurch gekennzeichnet, daß man den Wasserstoff durch einen hochporösen Sinterwerkstoff mit einer Porenweite von kleiner als 50 µm in das Polymerisat einleitet.

3. Verfahren nach Anspruch 2, dadurch gekennzeichnet, daß der Sinterwerkstoff eine Porenweite von kleiner als 10 µm aufweist.

4. Verfahren nach Anspruch 1, dadurch gekennzeichnet, daß man bei Wasserstoffdrücken von unter 15 bar hydriert.

5. Verfahren nach Anspruch 1, dadurch gekennzeichnet, daß man bei Wasserstoffdrücken von 5 bis 12 bar hydriert.

## Claims

1. A process for the preparation of a high purity polymer or copolymer obtained by cationic polymerization of tetrahydrofuran and, if desired, an alkylene oxide, in which the polymer is treated with hydrogen in the presence of a hydrogenation catalyst in order to reduce the color index, which comprises passing the hydrogen into the polymer with a bubble diameter of less than 50 µm.

2. A process as claimed in claim 1, wherein the hydrogen is passed into the polymer through a highly porous sintered material having a pore width of less than 50 µm.

3. A process as claimed in claim 2, wherein the sintered material has a pore width of less than 10 µm.

4. A process as claimed in claim 1, wherein the hydrogenation is carried out at a hydrogen pressure of less than 15 bar.

5. A process as claimed in claim 1, wherein the hydrogenation is carried out at a hydrogen pressure of from 5 to 12 bar.

## Revendications

1. Procédé de préparation de polymères ou de copolymères de haute pureté, qui sont obtenus par polymérisation cationique de tétrahydrofurane et éventuellement d'oxyde d'alkylène, dans lequel on traite les polymères à l'hydrogène en présence d'un catalyseur d'hydrogénation pour diminuer l'indice de coloration, caractérisé en ce que l'on introduit l'hydrogène sous fort de bulles de diamètres inférieurs à 50 µm dans le polymère.

2. Procédé selon la revendication 1, caractérisé en ce que l'on introduit l'hydrogène dans le polymère à travers une matière frittée hautement poreuse ayant une dimension des pores inférieure à 50 µm.

3. Procédé selon la revendication 2, caractérisé en ce que la matière frittée présente une dimension des pores inférieure à 10 µm.

4. Procédé selon la revendication 1, caractérisé en ce que l'on procède à l'hydrogénation à des pressions d'hydrogène inférieures à 15 bar.

5. Procédé selon la revendication 1, caractérisé en ce que l'on procède à l'hydrogénation à des pressions d'hydrogène comprises entre 5 et 12 bar.
